# EUROPEAN PATENT APPLICATION

(11) **EP 4 691 926 A1**
(43) Date of publication of application: **11.02.2026**
(21) Application number: 24382892.8
(22) Date of filing: 08.08.2024
(51) Int. Cl.: B65B 51/16, B65B 51/30, B65B 59/02, B65B 65/02, B29C 65/00

(54) **PACKAGING MACHINE**

(71) Applicant: Ulma Packaging, S.Coop., 20560 Oñati (ES)
(72) Inventor: JORGE GABILONDO, Asier, 20560 OÑATI (ES); ARZUAGA CORRALES, Iñaki, 20560 OÑATI (ES); MURGIA MENDIZABAL, Aritz, 20560 OÑATI (ES)
(74) Representative: Galbaian S.Coop.

(57) **Abstract**

The invention relates to a packaging machine with a sealing and cutting assembly comprising two lateral frames (7.1, 7.2) facing each other; a first rotating assembly (1) with an axis of rotation (1.0) and an actuation tool (1.1) arranged between the lateral frames (7.1, 7.2) with possibility to rotate; a second rotating assembly (2) with an axis of rotation (2.0) and an actuation tool (2.1) arranged between the lateral frames (7.1, 7.2) with possibility to rotate; and a respective adjustment assembly (9) associated with each lateral frame (7.1, 7.2). Each adjustment assembly (9) comprises a lateral plate (9.0) associated with a lateral frame (7.1, 7.2) by means of a plate rotating shaft (9.00) with respect to which it can rotate. The second axis of rotation (2.0) is associated with the lateral plate (9.0) at a point not coincident with the plate rotating shaft (9.00).

## Description

### TECHNICAL FIELD

The present invention relates to packaging machines.

### PRIOR ART

In product packaging, different types of packaging machines are known for packaging products. One type of packaging machine is that which packages products in a continuous film which is given a tube shape by longitudinal sealing of its longitudinal ends. With the product inside the film tube, the film tube is acted upon by means of a sealing and cutting assembly, which makes a transverse cut in the film tube, separating it in two, and a transverse seal on each side of the cut. The transverse seal on one side of the cut closes one end of the film tube, and the other seal closes a second end of a package which is separated from the film tube by the transverse cut. The other end of the package has been closed in the previous operation of the sealing and cutting assembly and corresponds to the end of the film tube which has been sealed in that previous operation.

In some cases the sealing and cutting assembly comprises two rotating assemblies between which the film tube moves. Each rotating assembly comprises an axis of rotation and an actuation tool that rotates relative to the axis of rotation. The actuation tools are configured so that in a rotating position they cooperate with each other to perform the previously described sealing and cutting operation on said film tube, and for this purpose the axes of rotation are parallel and spaced from each other a given distance, preferably in a vertical direction, which depends on the material on which the rotating assemblies have to act when cooperating with each other.

It is therefore common to have to adjust the position of at least one of two rotating assemblies when changing material, in particular to adjust the position of its axis of rotation relative to the axis of rotation of the other rotating assembly so that both axes of rotation are parallel and at the corresponding determined distance from each other.

US3641857A discloses a packaging machine with a sealing and cutting assembly comprising a first rotating assembly with a first axis of rotation and a first actuation tool, a second rotating assembly with a second axis of rotation and a second actuation tool, an actuator associated with the first rotating assembly for causing said first rotating assembly to rotate with respect to the first axis of rotation, and a transmission assembly for transmitting said rotation to the second rotating assembly, the second actuation tool rotating with respect to the second axis of rotation. The two axes of rotation are vertically spaced.

### DISCLOSURE OF THE INVENTION

The object of the invention is to provide a packaging machine as defined in the claims.

The machine comprises a sealing and cutting assembly comprising a first lateral frame and a second lateral frame facing each other; a first rotating assembly comprising a first axis of rotation and at least a first actuation tool attached to the two lateral frames with possibility to rotate relative to the first axis of rotation and such that the first actuation tool is arranged between the two lateral frames; a second rotating assembly comprising a second axis of rotation and at least a second actuation tool, the second actuation tool being arranged between the two lateral frames with possibility to rotate relative to the second axis of rotation and the second axis of rotation being distanced from the first axis of rotation, preferably in a vertical direction; and a respective adjustment assembly attached to each lateral frame.

Each adjustment assembly comprises a lateral plate attached to the corresponding lateral frame capable of rotation relative to a plate rotating shaft, and the second actuation tool of the second rotating assembly is attached to the lateral plate with possibility to rotate relative to a connecting axis that is distanced from the plate rotating shaft. Both the plate rotating shaft and the connecting axis are associated with a respective determined point of the lateral plate. Thus, as the plate rotating shaft and the connecting axis are not coincident, i.e. they are associated to different points of the lateral plate, when the lateral plate rotates with respect to the lateral frame (with respect to the plate rotating shaft), the point associated to the connecting axis modifies its position, thus displacing the connecting axis. The connecting axis corresponds to the second axis of rotation of the second rotating assembly, such that this displacement causes an adjustment in the position of the second axis of rotation and thus changes the relative position between the axes of rotation of the two rotating assemblies.

Each adjustment assembly further comprises an adjustment drive configured to cause the lateral plate to rotate relative to the corresponding lateral frame by rotating relative to the plate rotating shaft. The adjustment drive comprises a movable element and is configured so that when said adjustment drive is actuated, the movable element moves with respect to the plate rotating shaft, preferably in a direction comprising a horizontal component. The movable element is associated with the lateral plate such that its displacement causes the lateral plate to rotate with respect to the lateral frame.

The relative position between the axes of rotation of the two rotating assemblies can be easily adjusted thanks to the adjustment set and the possibility to rotate of the lateral plate in relation to the lateral frame to which it is attached. This position adjustment makes it possible to move the two axes of rotation away from or towards each other, which is important at least when replacing a film that was first used with another film of a different material and/or different properties, since the two films may have different thicknesses, for example, and thus facilitates the change of the reference to be packaged.

In addition, if the same adjustment is made on both adjustment sets, the displacement of the second axis of rotation is maintained while maintaining the orientation of the axis of rotation (and therefore the parallelism with the first axis of rotation if that is the starting point), but if necessary, it is also possible to cause an inclination of the axis of rotation by adjusting only one of the adjustment sets or by adjusting both adjustment sets differently, which can occur when for some reason the two axes of rotation are no longer parallel, for example.

These and other advantages and features of the invention will become apparent in view of the figures and the detailed description of the invention.

### DESCRIPTION OF THE DRAWINGS

Figure 1 shows an embodiment of the packaging machine according to the invention.
Figure 2 is a perspective view of a sealing and cutting assembly of the packaging machine of figure 1.
Figure 3 shows a relationship between the actuation tools of the two rotating assemblies of the sealing and cutting assembly of figure 2, in three different positions.
Figure 4 shows a perspective setting assembly of the machine of figure 1.
Figure 5 is a side view of the machine adjustment assembly of figure 4.
Figure 6 is a perspective view of an adjustment assembly of another embodiment of the packaging machine according to the invention.
Figure 7 is a side view of an adjustment assembly of another embodiment of the packaging machine according to the invention.

### DETAILED DISCLOSURE OF THE INVENTION

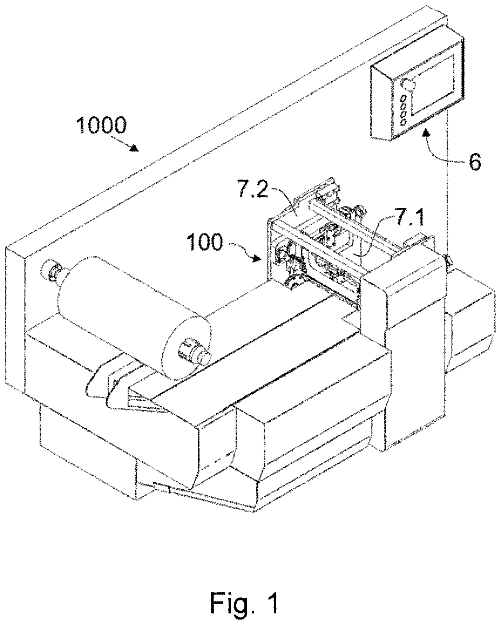

The packaging machine 1000, as shown in figure 1 by way of example, comprises a sealing and cutting assembly 100.

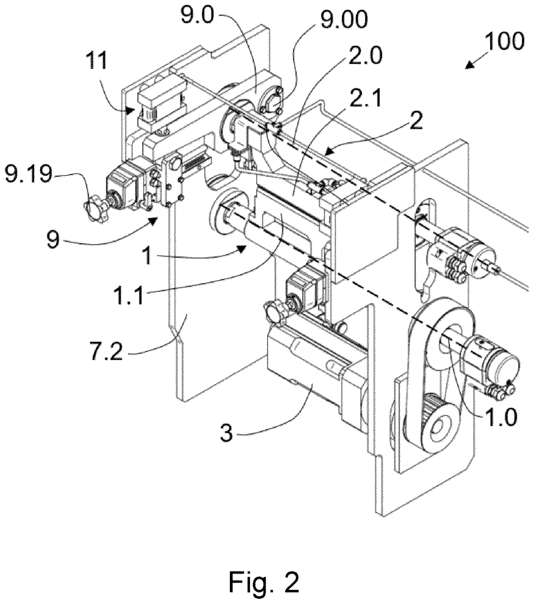

As shown in figure 2, the sealing and cutting assembly 100 comprises a first lateral frame 7.1 and a second lateral frame 7.2 facing each other; a first rotating assembly 1 with a first axis of rotation 1.0 and at least a first actuation tool 1.1 that rotates with respect to the first axis of rotation 1.0, the first actuation tool 1.1 being arranged between the two lateral frames 7.1 and 7.2 and connected to the two lateral frames 7.1 and 7.2 with possibility to rotate relative to the first axis of rotation 1.0; a second rotating assembly 2 with a second axis of rotation 2.0 and at least a second actuation tool 2.1 that rotates relative to the second axis of rotation 2.0, the second actuation tool 2.1 being arranged between the two lateral frames 7.1 and 7.2 with possibility to rotate relative to the second axis of rotation 2.0, and the second axis of rotation 2.0 distanced, preferably in a vertical direction, from the first axis of rotation 1.0; and a respective adjustment assembly 9 attached to each lateral frame 7.1 and 7.2 such that the sealing and cutting assembly 100 comprises two adjustment assemblies 9, both adjustment assemblies 9 being associated with the second rotating assembly 2.

The two adjustment assemblies 9 are configured to be able to act independently or simultaneously as required. This allows at least the following two adjustments of the position of the second axis of rotation 2.0:
- When the two adjusting assemblies 9 are operated simultaneously and in the same way, the second axis of rotation 1.0 does not change their orientation and the distance between the two axes of rotation 1.0 and 2.0 is modified. This makes it possible to work with films or materials of different thicknesses.
- The fact that the two adjustment assemblies 9 can be operated independently allows the alignment or parallelism of the second axis of rotation 2.0 with respect to the first axis of rotation 1.0 to be adjusted, so that both axes of rotation 1.0 and 2.0 can be arranged parallel if required.

The sealing and cutting assembly 100 further comprises an actuator 3 associated with the first rotating assembly 1 for causing the first actuation tool 1.1 to rotate with respect to the first axis of rotation 1.0, and a transmission system not shown in the figures, for transmitting said rotation to the second axis of rotation 2.0 and to the second actuation tool 2.1. In this way, the two rotating assemblies 1 and 2 rotate simultaneously.

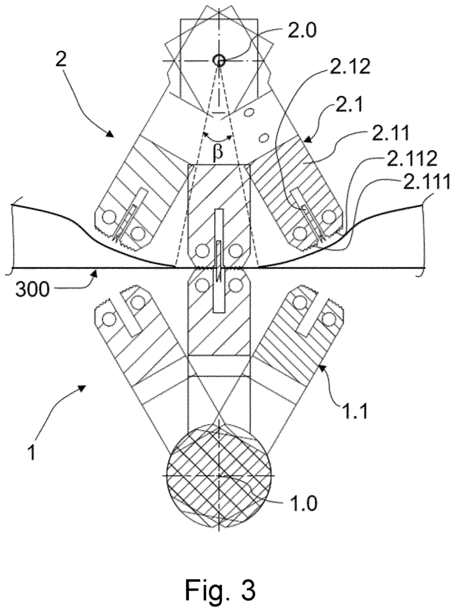

The actuation tools 1.1 and 2.1 are configured so that they can cooperate with each other during rotation of the rotating assemblies 1 and 2, in a given position as shown in figure 3 (or over an angular range β of positions).

In a packaging machine 1000 with two rotating assemblies 1 and 2 as described, a film tube 300 with the products to be packaged inside it is passed between the two rotating assemblies 1 and 2 (products not shown in the figures), and when the actuation tools 1.1 and 2.1 of the rotating assemblies 1 and 2 cooperate with each other, they cut the film tube 300 transversely and seal the film tube 300 transversely on both sides of the transversal cut. This results in a separate, closed package downstream of the transversal cut and a film tube 300 closed at one end upstream of the transversal cut.

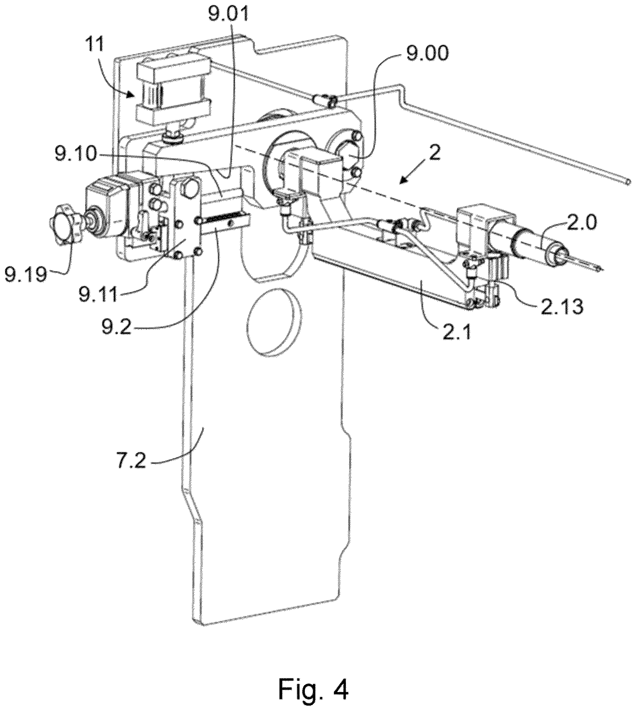

As depicted in figures 4 to 7, each adjustment assembly 9 comprises a lateral plate 9.0 attached to the corresponding lateral frame 7.1 and 7.2, with possibility to rotate relative to an plate rotating shaft 9.00 corresponding to a first determined point of said lateral plate 9.0. The second actuation tool 2.1 of the second rotating assembly 2 is attached to the lateral plate 9.0 with possibility to rotate relative to a connecting axis 9.02. The connecting axis 9.02 of each lateral plate 9.0 corresponds to the second axis of rotation 2.0 of the second rotating assembly 2, and further corresponds to a second determined point of said lateral plate 9.0 which is not coincident with the first point, said connecting axis 9.02 being thus distanced from the plate rotating shaft 9.00.

Each adjustment assembly 9 further comprises an adjustment drive 9.1 configured to cause the lateral plate 9.0 to rotate with respect to the corresponding lateral frame 7.1 and 7.2, causing said lateral plate 9.0 to rotate with respect to the plate rotating shaft 9.00. The adjustment drive 9.1 comprises a movable element 9.11. The adjustment drive 9.1 is configured so that the movable element 9.11 moves with respect to the axis of rotation 9.00 when said adjustment drive 9.1 is actuated, the distance separating the movable element 9.11 from the plate rotating shaft 9.00 being varied. The movable element 9.11 is associated with the lateral plate 9.0 in such a way that its displacement causes the lateral plate 9.0 to rotate with respect to the plate rotating shaft 9.00.

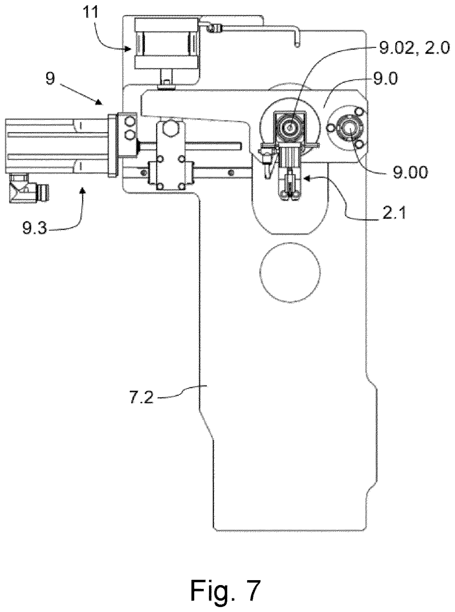

In some embodiments, such as that depicted in figure 7, the adjustment assembly 9 comprises an actuator 9.3 configured to cause actuation of the corresponding adjustment drive 9.1, and a control unit 6 configured to cause a controlled actuation of the actuator 9.3 of the adjustment assembly 9. In this way, no manual actuation by a user is required to perform such adjustment, facilitating such adjustment. The control unit 6 is preferably configured to arrange the second axis of rotation 2.0 of the second rotating assembly 2 in a predetermined vertical position with respect to the first axis of rotation 1.0 of the first rotating assembly 1, depending on requirements. In these embodiments, the user can for example indicate by display the type of film or material to be used for packaging, and the control unit 6 can automatically make the adjustment based on this information. In other embodiments the adjustment actuators 9.1 may be actuated manually, as is the case with the embodiments shown in figures 4 to 6, where the adjustment actuator 9.1 comprises a handle 9.19 which rotates when actuated, but in some embodiments such actuation may be automatic.

The adjustment actuator 9.1 may comprise a stem 9.10 having a longitudinal axis 9.100, which is configured to rotate with respect to its longitudinal axis 9.100 when the adjustment actuator 9.1 is actuated. The movable element 9.11 is associated with the stem 9.10 such that said rotation causes the movable element 9.11 to move with respect to the plate rotating shaft 9.00.

Preferably the stem 9.10 of the adjustment actuator 9.1 is a threaded stem, and the movable element 9.11 is configured to cooperate with said thread of the stem 9.10.

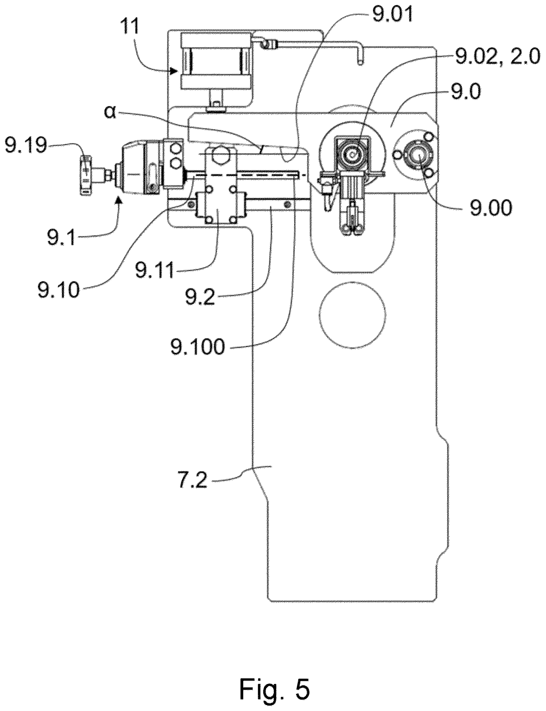

In some embodiments, as in the embodiment depicted in figures 4 and 5, the lateral plate 9.0 of each adjustment assembly 9 comprises a support zone 9.01 that is distanced from the plate rotating shaft 9.00, preferably in a direction comprising a horizontal component. The adjustment assembly 9 is configured so that the support zone 9.01 is in contact with the movable element 9.11, said movable element 9.11 being associated with the lateral plate 9.0 in these embodiments by means of this contact. Thanks to said contact, which is present at all times, the displacement of the movable element 9.11 causes said lateral plate 9.0 to rotate, either because said movable element 9.11 pushes on said support zone 9.01 or because said support zone 9.01 is supported by said movable element 9.11 and maintains its support (depending on the direction of displacement of said movable element 9.11). In these embodiments, the adjustment drive 9.1 may be attached to the corresponding lateral frame 7.1 and 7.2.

Preferably the support area 9.01 of each lateral plate 9.0 comprises a straight surface extending with a determined angle α with respect to the longitudinal axis 9.100 of the stem 9.10 of the corresponding adjustment actuator 9.1 greater than 0°, although it could comprise another shape instead of a straight surface (it could be a curved surface, for example). In the case of a straight surface, the angle α value determined influences the accuracy of the adjustment, whereby the angle α is preferably less than 5°. In the case of a threaded stem 9.10, the linear displacement of the threaded stem 9.10 also depends on the pitch of the thread, whereby the accuracy of the fit depends on both the angle α and the pitch. Preferably the pitch is configured so that with each turn of the threaded stem 9.10, the threaded stem 9.10 (and thus the movable element 9.11) is displaced linearly by less than 2mm.

Preferably each adjustment assembly 9 may comprise a guide 9.2 extending parallel to the longitudinal axis 9.100 of the stem 9.10 and attached to the corresponding lateral frame 7.1 and 7.2, and the corresponding movable element 9.11 is configured to cooperate with said guide 9.2 during its displacement.

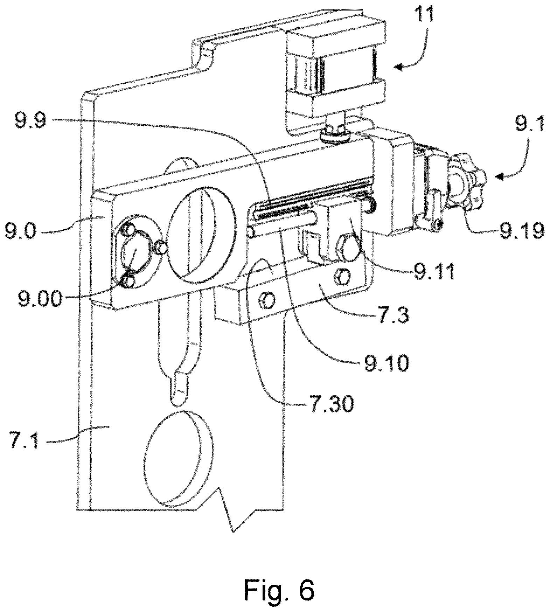

In other embodiments, as in the embodiment shown in figure 6, the corresponding lateral frame 7.1 and 7.2 comprises a sliding element 7.3 which cooperates with the movable element 9.11 and which defines a path different from that of the longitudinal axis 9.100 of the piston stem 9.10. The piston stem 9.10 is connected to the lateral plate 9.0 in such a way that the movable element 9.11 moves with respect to the sliding element 7.3 in contact with the sliding element 7.3 at all times and in solidarity with the lateral plate 9.0, so that the movable element 9.11 follows the path of the sliding element 7.3 during its movement and causes, with this movement, the lateral plate 9.0 to rotate with respect to the plate rotating shaft 9.00. In these embodiments, the adjustment drive 9.1 may be attached to the lateral plate 9.0, said movable element 9.11 being associated with the lateral plate 9.0 in these embodiments via the adjustment drive 9.1.

The sliding element 7.3 may comprise a support surface 7.30 which is linear and which extends at an angle α determined with respect to the longitudinal axis 9.100 of the stem 9.10 of the corresponding adjustment actuator 9.1, said angle α being preferably less than 5° to obtain greater precision as previously described for other embodiments.

In these embodiments each adjustment assembly 9 comprises a frame 9.9 attached to the lateral plate 9.0, facing and in contact with the movable element 9.11 and extending parallel to the longitudinal axis 9.100 of the stem 9.10, the movable element 9.11 being arranged between said frame and the sliding element 7.3. In another alternative embodiment, in order to avoid the use of the sliding element 7.3, the lateral plate 9.0 comprises a surface facing and in contact with the movable element 9.11 and extending parallel to the longitudinal axis 9.100 of the piston stem 9.10, the movable element 9.11 being arranged between said surface of the lateral plate 9.0 and the sliding element 7.3.

The packaging machine 1000 may further comprise a pressure actuator 11 associated with each lateral plate 9.0, for pressing the corresponding lateral plate 9.0 in a downward direction, to exert a pressure on the second actuation tool 2.1 towards the first actuation tool 1.1. Such pressure represents the pressure exerted on the film or material to be sealed when the first actuation tool 1.1 and the second actuation tool 1.2 cooperate with each other. Said pressure actuators 11 are preferably controlled by means of a fluid, preferably pressurised air, in such a way that it is possible to regulate the pressure they exert on the lateral plates 9.0 in a simple manner, and are preferably communicated with each other in such a way that they exert an equal pressure on the corresponding lateral plate 9.0.

The second actuation tool 2.1 comprises a sealing tool 2.11 with two sealing surfaces 2.111 and 2.112, and a cutting tool 2.12, such as a blade, arranged between the two sealing surfaces 2.111 and 2.112. Thus, when the actuation tools 1.1 and 2.1 seal and cut the corresponding film or material, the two sealing surfaces 2.111 and 2.112 provide a transverse seal on each side of the cut.

The cutting tool 2.12 is configured to move relative to the sealing tool 2.11 between an active position in which it protrudes from the sealing surfaces 2.111 and 2.112 of the sealing tool 2.11, and an inactive position in which the cutting tool 2.12 is retracted relative to the sealing surfaces 2.111 and 2.112. Therefore, when the cutting tool 2.12 has to actuate is controlled, which helps to increase its service life. Furthermore, by controlling the actuation of the cutting tool 2.12, it is also possible to control how much it protrudes from the sealing surfaces 2.111 and 2.112 in the active position, which can be adapted to different materials to be cut. This also makes it possible to dispense with the need for a support against which the cutting tool 2.12 has to strike in order to make the cut, since with the proposed solution it can be made to protrude further, if necessary, which also increases its service life since it suffers less wear with each actuation.

The second actuation tool 2.1 comprises at least one actuation drive 2.13 configured to act by means of fluid action and to cause, with its actuation, the cutting tool 2.12 to move from at least the inactive position to the active position. The fluid is preferably pressurised air, the actuating drive 2.13 being in this case a pneumatic drive.

Preferably the second actuation tool 2.1 comprises at least two actuation drives 2.13, one on each side of the cutting tool 2.12 in relation to the axis of rotation 2.0, both actuation drives 2.13 acting simultaneously. In this way, the size of the actuation drives 2.13 can be reduced compared to using a single actuation drive 2.13 by dividing the required force, and a correct actuation of the cutting tool 2.12 is ensured by simultaneously actuating the cutting tool 2.12 from both sides.

The sealing and cutting assembly 100 may comprise an actuation control unit, which may be the control unit 6 or a different control unit, configured to cause actuation of the actuation drive 2.13 of the second actuation tool 2.1 when the second actuation tool 2.1 is in an angular position in which it cooperates with the first actuation tool 1.1 to seal and cut a film or material arranged between the two actuation tools 1.1 and 2.1.

In embodiments wherein the sealing and cutting assembly 100 comprises pressure actuators 11 and the actuating drive 2.13, said pressure actuators 11 and said actuating drive 2.13 may be connected to the same fluid source, preferably pressurized air, where they are automatically controlled. The sealing and cutting assembly 100 may comprise a controllable electro valve, or a similar device, connected between the fluid source and each of the pressure actuators 11 and the actuating drive 2.13, and an actuation control unit which is configured to control the opening and closing of said pressure actuators 11 and said actuating drive 2.13, such that both the pressure exerted by the pressure actuators 11 and the force and momentum at which the tool 2.12 acts are controlled. The pressure unit may be the control unit 6 or a different control unit.

Preferably one and the same control unit 6 is configured to control all controllable drives and actuators of the sealing and cutting assembly 100.

A control unit of the packaging machine 1000, such as the control unit 6 and any additional control unit, may comprise a microprocessor, a controller, an FPGA or any other computationally capable device.

## Claims

1. Packaging machine comprising a sealing and cutting assembly (100) with a first lateral frame (7.1) and a second lateral frame (7.2) facing each other; a first rotating assembly (1) with a first axis of rotation (1.0) and at least a first actuation tool (1.1) which is arranged between the two lateral frames (7.1, 7.2) and attached to the two lateral frames (7.1, 7.2) with possibility to rotate relative to the first axis of rotation (1.0); a second rotating assembly (2) comprising a second axis of rotation (2.0) and at least a second actuation tool (2.1) which is arranged between both lateral frames (7.1, 7.2) w with possibility to rotate with respect to the second axis of rotation (2.0), said second axis of rotation (2.0) being distanced from the first axis of rotation (1.0), preferably in a vertical direction; and a respective adjustment assembly (9) attached to each lateral frame (7.1, 7.2), both adjustment assemblies (9) being associated with the second rotating assembly (2), **characterised in that** each adjustment assembly (9) comprises a lateral plate (9.0) attached to the corresponding lateral frame (7.1, 7.2) correspondingly rotatable with respect to a plate rotating shaft (9.00), the second actuation tool (2.1) of the second rotating assembly (2) being attached to the lateral plate (9.0) rotatable with respect to a connecting axis (9.02) which is spaced away from the plate rotating shaft (9.00), said connecting axis (9.02) corresponding to the second axis of rotation (2.0) of the second rotating assembly (2); and an adjustment drive (9.1) configured to cause the lateral plate (9.0) to rotate relative to the lateral frame (7.1, 7.2) correspondingly rotating said lateral plate (9.0) with respect to the plate rotating shaft (9.00), the adjustment drive (9.1) comprising a movable element (9.11) and the adjustment drive (9.1) being configured so that, when said adjustment drive (9.1) is actuated, the movable element (9.11) is displaced with respect to the plate rotating shaft (9.00), the movable element (9.11) being associated with the lateral plate (9.0) in such a way that its displacement causes the lateral plate (9.0) to rotate with respect to the plate rotating shaft (9.00).

2. Packaging machine according to claim 1, wherein the adjustment actuator (9.1) comprises a stem (9.10) with a longitudinal axis (9.100), the stem (9.10) being configured to rotate with respect to its longitudinal axis (9.100) when the adjustment actuator (9.1) is actuated, and the movable element (9.11) being associated with the stem (9.10) such that such rotation causes the movable element (9.11) to move relative to the plate rotating shaft (9.00).

3. Packaging machine according to claim 2, wherein the stem (9.10) of the adjustment actuator (9.1) is a threaded stem, and wherein the moving element (9.11) is configured to cooperate with the thread of the stem (9.10), such that the moving element (9.11) moves when rotating said stem (9.10) along the longitudinal axis (9.100) of the stem (9.10).

4. Packaging machine according to claim 2 or 3, wherein the lateral plate (9.0) of each adjustment assembly (9) comprises a support area (9.01) which is spaced away from the plate rotating shaft (9.00), the adjustment assembly (9) being configured so that the support area (9.01) is in contact with the movable element (9.11) at all times and so that the displacement of the movable element (9.11) causes said lateral plate (9.0) to rotate with respect to the plate rotating shaft (9.00).

5. Packaging machine according to claim 4, wherein the support surface (9.01) of each lateral plate (9.0) comprises a straight surface extending inclined with respect to the longitudinal axis (9.100) of the stem (9.10) of the corresponding adjustment actuator (9.1), with a determined angle (α), preferably, less than 5°.

6. Packaging machine according to any of claims 2 to 5, wherein each adjustment assembly (9) comprises a guide (9.2) extending parallel to the longitudinal axis (9.100) of the stem (9.10) and attached to the corresponding lateral frame (7.1, 7.2), the movable element (9.11) of an adjustment assembly (9) being configured to cooperate with said guide (9.2) during its displacement.

7. Packaging machine according to any of claims 1 to 6, wherein the adjustment drive (9.1) is attached to the corresponding lateral frame (7.1, 7.2).

8. Packaging machine according to claim 3, wherein each lateral frame (7.1, 7.2) comprises a sliding element (7.3) which extends defining a trajectory different from that of the longitudinal axis (9.100) of the stem (9.10), the stem (9.10) being attached to the lateral plate (9.0) and the adjustment assembly (9) being configured so that the moving element (9.11) is in contact with the sliding element (7.3) at all times, such that the movable element (9.11) follows the trajectory of the sliding element (7.3) during its displacement and causes, with said displacement, the lateral plate (9.0) to rotate with respect to the plate rotating shaft (9.00).

9. Packaging machine according to claim 8, wherein each sliding element (7.3) comprises a support surface (7.30) which is linear and which extends inclined with respect to the longitudinal axis (9.100) of the stem (9.10) of the corresponding adjustment actuator (9.1) with a given angle (α) which is preferably less than 5°.

10. Packaging machine according to claim 9, wherein each adjustment assembly (9) comprises a frame attached to the lateral plate (9.0), facing and in contact with the movable element (9.11) and extending parallel to the longitudinal axis (9.100) of the stem (9.10), the movable element (9.11) being arranged between said frame and the sliding element (7.3), or wherein the lateral plate (9.0) comprises a surface facing and in contact with the movable element (9.11) and extending parallel to the longitudinal axis (9.100) of the piston rod (9.10), the movable element (9.11) being arranged between said surface of the lateral plate (9.0) and the sliding element (7.3).

11. Packaging machine according to any of claims 1 to 10, wherein each adjustment assembly (9) comprises an actuator (9.3) configured to cause the actuation of the corresponding adjustment drive (9.1) and a control unit (6) configured to cause a controlled actuation of the actuator (9.3).

12. Packaging machine according to claim 11, wherein the control unit (6) is configured to cause an actuation of the actuator (9.3) of the adjustment assembly (9) to arrange the second axis of rotation (2.0) of the second rotating assembly (2) at a given vertical distance from the first axis of rotation (1.0) of the first rotating assembly (1).

13. Packaging machine according to any of claims 1 to 12, comprising a respective pressure actuator (11) for each lateral plate (9.0), the pressure actuator (11) being configured to press the respective lateral plate (9.0) in a downward direction.

14. Packaging machine according to claim 13, wherein the pressure actuator (11) is configured to be actuated by a fluid, both pressure actuators (11) being connected to the same fluid source.

15. Packaging machine according to any of claims 1 to 14, wherein the second actuation tool (2.1) of the second rotating assembly (2) comprises a sealing tool (2.11) having two sealing surfaces (2.111, 2.112); a cutting tool (2.12) arranged between both sealing surfaces (2.111, 2.112) and configured to move relative to the sealing tool (2.11) between an active position in which it protrudes from the sealing surfaces (2.111, 2.112) and an inactive position in which said cutting tool (2.12) is retracted relative to said sealing surfaces (2.111, 2.112); and an actuating drive (2.13) configured to act by the action of a fluid and to cause, with its actuation, the cutting tool (2.12) to move from at least the inactive position to the active position.
